(19) Europäisches Patentamt
European Patent Office
Office européen des brevets

(11) **EP 2 391 051 B1**

(12) **FASCICULE DE BREVET EUROPEEN**

(45) Date de publication et mention
de la délivrance du brevet:
**21.05.2014  Bulletin 2014/21**

(51) Int Cl.:
***H04L 9/00*** *(2006.01)*

(21) Numéro de dépôt: **11167336.4**

(22) Date de dépôt: **24.05.2011**

(54) **Procédé de détermination d'une représentation d'un produit d'éléments d'un corps fini**

Verfahren zur Bestimmung der Darstellung einer Multiplikation von zwei Elementen eines endlichen Körpers

Method for determining a representation of a multiplication of elements of a finite field

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.05.2010  FR 1002213**

(43) Date de publication de la demande:
**30.11.2011  Bulletin 2011/48**

(73) Titulaire: **Oberthur Technologies**
**92700 Colombes (FR)**

(72) Inventeurs:
• **Pruff, Emmanuel**
**75018 PARIS (FR)**
• **Rivain, Matthieu**
**75017 PARIS (FR)**

(74) Mandataire: **Bonnans, Arnaud Santarelli,**
**14 avenue de la Grande Armée**
**BP 237**
**75822 Paris Cedex 17 (FR)**

(56) Documents cités:
**US-A1- 2006 120 527**

• **SVETLA NIKOVA ET AL: "Secure Hardware Implementation of Non-linear Functions in the Presence of Glitches", 3 décembre 2008 (2008-12-03), INFORMATION SECURITY AND CRYPTOLOGY Â ICISC 2008, SPRINGER BERLIN HEIDELBERG, BERLIN, HEIDELBERG, PAGE(S) 218 - 234, XP019115797, ISBN: 978-3-642-00729-3 * sections 3 and 4 ***
• **KAI SCHRAMM ET AL: "Higher Order Masking of the AES", 1 janvier 2005 (2005-01-01), TOPICS IN CRYPTOLOGY - CT-RSA 2006 : THE CRYPTOGRAPHERS' TRACK AT THE RSA CONFERENCE 2006, SAN JOSE, CA, USA, FEBRUARY 13-17, 2006 ; PROCEEDINGS; [LECTURE NOTES IN COMPUTER SCIENCE], SPRINGER, BERLIN, DE, PAGE(S) 208 - 225, XP019026783, ISBN: 978-3-540-31033-4 * section 3;figure 8 ***

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé de détermination d'une représentation d'un produit d'éléments d'un corps fini représentés chacun par une pluralité de valeurs, ainsi qu'un procédé d'évaluation d'une fonction utilisant le procédé de détermination précité et des dispositifs associés.

Afin d'éviter que des personnes malintentionnées puissent déduire de l'observation d'un circuit électronique les données que ce circuit manipule (principalement dans le domaine de la cryptographie), il est connu de masquer les données manipulées au moyen d'une valeur aléatoire (typiquement par combinaison de la donnée à traiter et de la valeur aléatoire au moyen d'une opération de ou exclusif, également dénommée XOR) de telle sorte que les données effectivement manipulées par le dispositif électronique diffèrent à chaque mise en oeuvre de l'algorithme concerné, même lorsque l'attaquant tente à dessein de faire reproduire l'algorithme à l'identique.

De par ses propriétés, l'opération de masquage peut être vue comme une addition dans l'ensemble formé par les données envisageables, typiquement l'ensemble des mots de n bits, auquel cas l'ensemble est un corps de Galois couramment dénoté $F_2^n$.

Afin de lutter encore plus efficacement contre les attaques, on a prévu d'utiliser plusieurs masques pour masquer une même donnée, typiquement de sorte que la somme (au moyen de l'opération XOR) de la donnée masquée et de l'ensemble des masques permette de retrouver la donnée originale.

La donnée originale est alors en quelque sorte représentée au cours des calculs par d valeurs (dont d-1 valeurs proviennent de tirages aléatoires et dont la somme vaut la donnée originale, c'est-à-dire non masquée).

Le traitement de telles données représentées par une pluralité de valeurs doit être tel que les opérations appliquées à ces valeurs résultent au final au traitement souhaité pour la somme de ces valeurs, ce qui ne pose pas de difficulté lorsque la fonction à appliquer est linéaire vis-à-vis de l'opération d'addition (puisqu'il suffit alors d'appliquer le traitement souhaité à chacune des valeurs représentant la donnée afin d'obtenir les différentes valeurs représentant le résultat de l'opération).

Une difficulté se pose en revanche lorsque l'on doit appliquer une fonction non-linéaire, comme c'est le cas par exemple dans le cadre de l'algorithme AES.

Dans le contexte de la mise en oeuvre de telles fonctions au moyen de circuits booléens, l'article *"Private circuits: securing hardware against probing attacks"*, de Y. Ishai et al., in Crypto 2003, LNCS 2729, PP.463-481, 2003 propose de sécuriser les portes ET (ou portes AND) en utilisant une pluralité de valeurs aléatoires binaires.

Toute fonction, éventuellement non-linéaire, implémentée en logique câblée peut ainsi être sécurisée au prix toutefois d'une augmentation de la surface de silicium utilisée.

Cette solution n'est par ailleurs pas applicable en pratique à une mise en oeuvre logicielle de la fonction à appliquer aux données (un traitement bit à bit sous forme logicielle étant très peu efficace), alors qu'une telle mise en oeuvre peut être préférable pour d'autres motifs. Une telle mise en oeuvre permet par exemple notamment d'éviter la présence de phénomènes électriques observables (tels que des retards) liés à la réalisation du masquage par un circuit (phénomènes dénommés "*glitches*"), qui rendent possibles certaines attaques ou nécessitent la mise en oeuvre de contre-mesures lourdes (tels que des circuits de synchronisations additionnels).

Dans ce contexte, l'invention propose un procédé, mis en oeuvre par un circuit électronique, de détermination d'une représentation du produit d'un premier élément et d'un second élément d'un ensemble fini de cardinal strictement supérieur à deux et dans lequel sont définies une addition et une multiplication commutative et distributive par rapport à l'addition, le premier élément étant représenté par une pluralité de d premières valeurs dont la somme est égale au premier élément et associées chacune à un entier compris entre 1 et d, le second élément étant représenté par une pluralité de d secondes valeurs dont la somme est égale au second élément et associées chacune à un entier compris entre 1 et d, comprenant les étapes suivantes :

- pour chaque couple formé d'un premier entier compris entre 1 et d et d'un second entier strictement supérieur au premier entier, obtention d'une valeur au moyen des sous-étapes suivantes :

   o tirage d'une valeur aléatoire associée au couple ;
   o première addition de ladite valeur aléatoire et du produit de la première valeur associée au premier entier et de la seconde valeur associée au second entier ;
   o seconde addition du résultat de la première addition et du produit de la première valeur associée au second entier et de la seconde valeur associée au premier entier ;

- pour chaque entier compris entre 1 et d, détermination de la valeur associée à l'entier concerné dans ladite représentation en sommant le produit des première et seconde valeurs associées à l'entier concerné, les valeurs aléatoires associées aux couples dont le premier entier est l'entier concerné et les valeurs obtenues pour les couples dont le second entier est l'entier concerné.

**EP 2 391 051 B1**

On propose ainsi d'utiliser une multiplication entre éléments de l'ensemble, c'est-à-dire entre données ; toute fonction, notamment non-linéaire, sur l'ensemble peut être écrite sous une forme utilisant de telles multiplications comme expliqué plus loin.

Le procédé proposé ci-dessus permet d'effectuer une telle multiplication entre deux éléments masqués à l'ordre d-1, sans compromettre le masquage utilisé. En effet, dans le cadre d'un processus de masquage, les premières valeurs peuvent être vues respectivement comme une donnée masquée (ici le premier élément masqué) et une pluralité de masques (ici d-1 masques) ; de même, les secondes valeurs peuvent être considérées respectivement comme une autre donnée masquée (ici le second élément masqué) et une autre pluralité de masques (ici d-1 masques).

On remarque que la définition donnée ci-dessus propose d'associer des valeurs à des entiers compris entre 1 et d (autrement dit de repérer des valeurs avec des indices variant de 1 à d) alors que la description qui suit utilise une indexation variant de 0 à d-1. Les indices utilisés en pratique ne sont naturellement que des éléments de mise en oeuvre de l'invention qui ne se limite pas à une indexation particulière. L'association des différentes valeurs à des entiers compris entre 1 et d, telle que prévue dans les revendications, entend toute indexation envisageable en pratique.

L'addition est par exemple une opération de type ou exclusif. Par ailleurs, la multiplication peut être une multiplication de polynômes à coefficients binaires suivie d'une étape de réduction par un polynôme à coefficients binaires irréductible. La multiplication peut en variante être définie comme suit : chaque élément de l'ensemble fini étant une puissance donnée d'un élément primitif, la multiplication peut alors être réalisée par une addition des exposants respectivement associés aux puissances à multiplier, modulo le cardinal du corps moins un.

En pratique, le produit de deux éléments de l'ensemble est par exemple obtenu par lecture, au sein d'une table mémorisée, d'un élément associé auxdits deux éléments.

S'agissant de masques, (d-1) valeurs parmi les d premières valeurs sont par exemple obtenues par tirage aléatoire.

Le procédé proposé ici est typiquement mis en oeuvre par un circuit électronique, par exemple par un microprocesseur, avec les avantages associés à ce type de mise en oeuvre ; en variante, il pourrait s'agir d'un circuit intégré à application spécifique. Le premier élément et le second élément sont typiquement des données codées chacune sur une pluralité de bits et manipulées par le microprocesseur.

L'ensemble peut être un corps de Galois $F_2{}^n$, avec n supérieur ou égal à 2, par exemple égal à 8.

Comme déjà indiqué, toute fonction pouvant être écrite sous une forme utilisant les multiplications, l'invention propose en outre un procédé d'évaluation d'une fonction appliquée à un élément d'un ensemble fini, caractérisé en ce qu'il comprend la détermination d'une pluralité de valeurs représentant le résultat de l'application d'un polynôme audit élément, ladite détermination incluant au moins une étape de détermination de la représentation du produit dudit élément par lui-même conforme à ce qui vient d'être envisagé.

La fonction peut être non-linéaire par rapport à l'addition, auquel cas l'utilisation des procédés qui viennent d'être décrits est particulièrement avantageuse.

L'invention propose également un dispositif de détermination d'une représentation du produit d'un premier élément et d'un second élément d'un ensemble fini de cardinal strictement supérieur à deux et dans lequel sont définies une addition et une multiplication commutative et distributive par rapport à l'addition, le premier élément étant représenté par une pluralité de d premières valeurs dont la somme est égale au premier élément et associées chacune à un entier compris entre 1 et d, le second élément étant représenté par une pluralité de d secondes valeurs dont la somme est égale au second élément et associées chacune à un entier compris entre 1 et d, comprenant :

- des moyens d'obtention, pour chaque couple formé d'un premier entier compris entre 1 et d et d'un second entier strictement supérieur au premier entier, d'une valeur :

  o par tirage d'une valeur aléatoire associée au couple ;
  o par première addition de ladite valeur aléatoire et du produit de la première valeur associée au premier entier et de la seconde valeur associée au second entier ;
  o par seconde addition du résultat de la première addition et du produit de la première valeur associée au second entier et de la seconde valeur associée au premier entier ;

- des moyens de détermination, pour chaque entier compris entre 1 et d, de la valeur associée à l'entier concerné dans ladite représentation en sommant le produit des première et seconde valeurs associées à l'entier concerné, les valeurs aléatoires associées aux couples dont le premier entier est l'entier concerné et les valeurs obtenues pour les couples dont le second entier est l'entier concerné.

L'invention propose enfin un dispositif d'évaluation d'une fonction appliquée à un élément d'un ensemble fini par détermination d'une pluralité de valeurs représentant le résultat de l'application d'un polynôme audit élément, comprenant un tel dispositif pour la détermination de la représentation du produit dudit élément par lui-même.

D'autres caractéristiques et avantages de l'invention apparaitront à la lumière de la description qui suit, faite en référence aux dessins annexés dans lesquels :

- la figure 1 représente un exemple de dispositif susceptible de mettre en oeuvre l'invention ;
- la figure 2 représente un procédé mis en oeuvre par le dispositif de la figure 1 et conforme aux enseignements de l'invention.

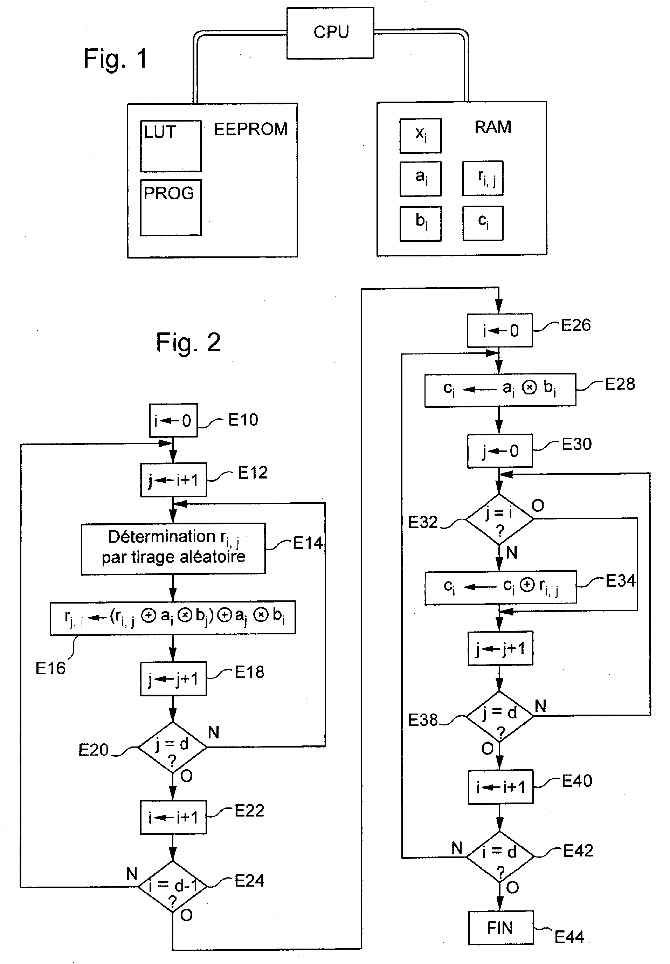

La **figure 1** représente les éléments principaux d'un dispositif apte à mettre en oeuvre le procédé proposé par l'invention.

Ce dispositif comprend un microprocesseur 2 connecté (à travers des bus adéquats) d'une part à une mémoire réinscriptible 4 (typiquement de type EEPROM) et à une mémoire vive 6.

Le dispositif de la figure 1 est par exemple un micro-ordinateur. En variante, il pourrait s'agir d'un autre type de dispositif électronique, par exemple sécurisé, telle qu'une carte à microcircuit.

La mémoire réinscriptible 4 contient notamment des instructions d'un programme d'ordinateur PROG qui, lorsqu'elles sont exécutées par le microprocesseur 2, permettent la mise en oeuvre des procédés proposés par l'invention, tel que celui décrit ci-après.

Le programme d'ordinateur PROG pourrait en variante être mémorisé sur un autre support de données (par exemple un disque dur), éventuellement amovible (par exemple un disque optique ou une mémoire amovible). Dans ce cas, le programme d'ordinateur PROG peut éventuellement être d'abord transféré dans la mémoire vive 6 avant son exécution par le microprocesseur 2.

Lors de son exécution par le microprocesseur 2, le programme d'ordinateur PROG met en oeuvre un procédé de traitement cryptographique de données qui implique notamment une donnée x à traiter.

Les données à traiter (notamment la donnée x) sont représentées au sein du dispositif de la figure 1 (et notamment de la mémoire vive 6) par des mots numériques formés chacun de plusieurs bits ; on utilise ici par exemple une représentation des données sous forme d'octets.

La mémoire vive 6 mémorise les variables et données traitées, notamment celles manipulées par le procédé décrit plus loin en référence à la figure 2.

Dans le cadre de leur traitement (en particulier lorsqu'il s'agit d'un traitement cryptographique), les données sont (chacune) vues comme des éléments d'un ensemble $F_{2^n}$ comprenant $2^n$ éléments et muni d'une structure de corps à travers la définition d'une part d'une addition entre deux éléments de l'ensemble (notée $\oplus$ dans la suite) et d'autre part d'une multiplication de deux éléments de l'ensemble (notée $\otimes$).

On comprend que, dans le cas décrit ici où les données sont représentées par des octets, le corps $F_{2^n}$ comprend 256 éléments ($n = 8$).

L'addition $\oplus$ définie sur ce corps est l'opération "*ou exclusif*" ou XOR (qui est une opération de base du fonctionnement du microprocesseur 2).

La multiplication $\otimes$ entre deux éléments (c'est-à-dire entre deux données codées sur plusieurs bits, typiquement 8 bits) peut quant à elle être définie comme une multiplication polynomiale modulaire, ou comme la multiplication de deux puissances d'un élément primitif (ou générateur) du corps (auquel cas, cette multiplication se ramène à une addition de deux exposants de l'élément primitif modulo $2^n-1$). On peut se référer à ce propos à l'ouvrage "Finite fields", volume 20 de l'"Encyclopedia of mathematics and its applications", de Rudolph Lidl and Harald Niederreiter, Cambridge University Press, 2ème édition, 1997.

Quelle que soit la représentation théorique utilisée, la multiplication est ici mise en oeuvre au moyen d'une table mémorisée (ici dans la mémoire réinscriptible 4). Une telle table, dénotée LUT (de l'anglais "*Look-Up Table*"), mémorise, pour tout couple d'éléments du corps, le résultat de la multiplication de ces éléments.

Dans ce contexte, un traitement d'une donnée qui réalise la transformation de cette donnée en une autre donnée peut être vu comme une fonction du corps sur lui-même (c'est-à-dire une fonction f qui associe à tout élément x du corps, c'est-à-dire à toute donnée envisageable, un élément f(x) du corps, c'est-à-dire la donnée obtenue par le traitement).

On utilise par ailleurs dans le dispositif de la figure 1 une technique de masquage selon laquelle une donnée déterminée x est manipulée seulement sous forme masquée par un ou plusieurs masque(s) $x_i$ ($i > 0$), typiquement déterminés par tirage aléatoire au début du traitement (c'est-à-dire en pratique au début de l'algorithme concerné, que l'on souhaite protéger par le masquage). Les masques peuvent par ailleurs être régénérés si nécessaire au cours du traitement.

Le masquage utilisé ici est l'addition successive (par application de l'opération XOR) des masques $x_i$ à la donnée x à masquer.

Un tel masquage est dit d'ordre supérieur lorsque plusieurs masques $x_i$ sont successivement appliqués à la donnée x.

Dans ce cas, la donnée x est comme représentée lors du fonctionnement par d données $x_i$, à savoir la donnée

masquée $x_0$ et les masques $x_1$, $x_2$, ..., $x_{d-1}$. (Les masques doivent en effet être mémorisés pour pouvoir retrouver la valeur sans masquage x). On parle de masquage d'ordre (d-1).

La donnée x est donc représentée lors du traitement par d données $x_i$ dont la somme (au sens de l'addition $\oplus$ définie sur le corps mentionné ci-dessus) est égale à la donnée x ainsi représentée :

$$x_0 \oplus x_1 \oplus x_2 \oplus \ldots \oplus x_{d-1} = x.$$

Comme déjà expliqué en introduction, du fait du tirage aléatoire des masques à chaque exécution d'un algorithme, le masquage permet de modifier les valeurs manipulées lors des différentes exécutions de l'algorithme et rend difficile (voir impossible) la déduction des données effectivement traitées à partir de l'observation du circuit, avec une difficulté croissante en fonction de l'ordre de masquage.

Le masquage implique toutefois en revanche un traitement particulier lorsque l'on doit appliquer à la donnée à traiter x (et donc en pratique aux données effectivement manipulées $x_i$) une fonction f non-linéaire par rapport à l'opération de masquage (ici l'addition $\oplus$, réalisée par une opération XOR). En effet, contrairement au cas des fonctions linéaires par rapport à cette opération, la somme des résultats $f(x_i)$ de l'application de la fonction f aux données manipulées $x_i$ est (par définition même de l'absence de linéarité) différente du résultat $f(x)$ de l'application de la fonction à la donnée traitée x.

On propose ci-dessous un procédé qui permet d'obtenir, à partir des données $x_i$ (où $x_0 \oplus x_1 \oplus x_2 \oplus \ldots \oplus x_{d-1}$ = x), des données $e_i$ dont la somme sera égale à $f(x)$ tout en conservant tout au long du calcul le masquage d'ordre (d-1).

On remarque tout d'abord que la formule d'interpolation de Lagrange permet de définir un polynôme $p(x)$ égal à la fonction $f(x)$ en chaque élément de l'ensemble $F_2^n$ :

$$p(x) = \bigoplus_{a \in F_{2^n}} \left[ f(a) \otimes \prod_{b \in F_{2^n}, b \neq a} \frac{x-b}{a-b} \right],$$

où le produit multiple $\Pi$ utilise la multiplication $\otimes$ et où $\dfrac{x-b}{a-b}$ est le produit (au sens de la multiplication $\otimes$) de l'élément $(x - b)$ par l'inverse (toujours au sens de la multiplication $\otimes$) de l'élément $(a - b)$. On remarque que la formule ci-dessous est rédigée sous sa forme générale (avec soustraction), mais que, dans les ensembles de type $F_2^n$ étudiés ici, la soustraction (symbole "-" ci-dessus) est également mise en oeuvre par une opération XOR, notée ici $\oplus$, du fait que l'application de l'opération XOR avec un élément donné (c'est-à-dire l'addition d'un élément donné) est involutive dans ce type d'ensembles.

D'après ce qui précède, la fonction f (notamment lorsqu'elle est non linéaire par rapport à l'addition $\oplus$) peut s'écrire sous forme d'un polynôme de degré $2^n-1$ et l'on peut donc définir la fonction f par une famille de coefficients $\alpha_i$ tels que :

$$f(x) = \bigoplus_{i=0}^{2^n-1} [\alpha_i \otimes x^i],$$

où $x^0$ est l'élément neutre par rapport à la multiplication $\otimes$, $x^1$ est l'élément x et, pour i>1, $x^i$ est l'élément x multiplié (i-1) fois par lui-même (au moyen de l'opération $\otimes$).

Le traitement d'une donnée x par la fonction f peut ainsi se ramener à une combinaison d'additions $\oplus$ et de multiplications $\otimes$.

Les additions sont naturellement linéaires vis-à-vis de l'opération de masquage (ici constituées par la même opération XOR) et la sommation des différents éléments concernés peut donc être réalisée par une sommation des d données manipulées représentant ces éléments.

Il en va de même pour la multiplication par chacun des coefficients $\alpha_i$, également linéaires par rapport à l'opération de masquage.

Il convient en revanche de mettre en oeuvre un procédé spécifique pour déterminer le résultat des multiplications à mettre en oeuvre (ici pour obtenir des puissances de l'élément à traiter x) tout en conservant le masquage d'ordre (d-1) du fait de la non linéarité de l'opération de multiplication par rapport à l'opération de masquage.

Le procédé de multiplication d'un nombre a (représenté par d valeur $a_i$) et d'un nombre b (représenté par d valeurs $b_i$) proposé dans ce but est décrit à présent en référence à la **figure 2.**

On comprend que dans le cadre de l'évaluation de la fonction f décrite ci-dessus, qui n'est qu'une application possible de ce procédé, les données a et b sont toutes deux égales à la donnée à traiter x.

Le procédé débute à l'étape E10 par l'initialisation à 0 d'une variable i.

On procède alors à l'étape E12 à l'initialisation d'une variable j à la valeur i+1.

On détermine alors à l'étape E14 une variable $r_{i,j}$ par tirage aléatoire, typiquement en utilisant une fonction de génération de valeurs aléatoires réalisée sous forme logicielle et qui fait partie du programme PROG.

On calcule alors une variable $r_{j,i}$ selon la formule :

$(r_{i,j} \oplus a_i \otimes b_j) \oplus a_j \otimes b_i$. On remarque que l'indice i est nécessairement différent de l'indice j dans cette formule (puisque j est initialisé à i+1 et incrémenté comme indiqué plus bas).

On rappelle que, selon une notation classique, la multiplication est prioritaire sur l'addition et que l'on effectue donc d'abord les multiplications $a_i \otimes b_j$ et $a_j \otimes b_i$, avant d'ajouter, au résultat de la première multiplication la valeur $r_{i,j}$ (au moyen d'un XOR), et d'ajouter enfin à cette somme le résultat de la seconde multiplication.

On remarque que le respect de cet ordre des opérations (en particulier des additions) est impératif si l'on veut conserver la sécurité du masquage.

On procède alors à l'étape E18 à l'incrémentation de la variable j.

On teste alors si la variable j est égale à d (qui représente comme indiqué précédemment le nombre de valeurs représentant une valeur à traiter).

Dans la négative (c'est-à-dire s'il reste des valeurs de j entre i+1 et d-1 qui n'ont pas été traitées), on reboucle à l'étape E14.

Dans l'affirmative, c'est-à-dire lorsque le dernier passage à l'étape E16 a été fait avec valeur de la variable j égale à d-1, on procède à l'étape suivante E22.

Cette étape E22 consiste à incrémenter la variable i.

On teste alors à l'étape E24 si la variable i est égale à (d-1). Dans la négative, on reboucle à l'étape E12 ce qui permet d'effectuer le traitement déjà décrit avec une valeur de i incrémentée. Dans l'affirmative, l'ensemble des valeurs $r_{i,j}$ ont été traitées (puisqu'il n'y a pas de valeurs $r_{i,i}$ à déterminer, et donc notamment pas de valeur $r_{d-1, d-1}$) et on procède alors à la seconde partie du procédé à l'étape E26.

L'étape E26 consiste à initialiser la variable i à 0.

On procède ensuite à l'étape E28 à laquelle on calcule le produit $a_i \otimes b_i$, que l'on mémorise dans une variable $c_i$.

On effectue alors l'étape E30 à laquelle on initialise la variable j à 0. A l'étape E32, on teste l'égalité entre les variables i et j.

Dans la négative, on ajoute (au moyen de l'opération $\oplus$) dans la variable $c_i$ la variable $r_{i,j}$ déterminée dans la première partie du procédé. Autrement dit, on calcule la somme $c_i \oplus r_{i,j}$, somme que l'on mémorise à nouveau (avec écrasement) dans la variable $c_i$.

Dans l'affirmative à l'étape E32 (c'est-à-dire si i=j), on procède directement (c'est-à-dire sans effectuer l'étape E34) à l'étape E36.

L'étape E34 est également suivie de l'étape E36, à laquelle on incrémente la variable j.

On teste alors à l'étape E38 si la variable j est égale à d. Dans la négative, on boucle à l'étape E32. Dans l'affirmative on passe à l'étape E40.

L'étape E40 consiste à incrémenter la variable i.

On procède ensuite à l'étape E42 à laquelle on teste si la variable i est égale à d.

Dans la négative, on boucle à l'étape E28 afin de déterminer la variable $c_i$ suivante.

Dans l'affirmative, toutes les variables $c_i$ (pour i variant de 0 à d-1) ont été déterminées et le procédé est donc terminé (étape E44).

Les d valeurs $c_i$ ainsi obtenues représentent le produit c, résultat de la multiplication a $\otimes$ b, c'est-à-dire que :

$$c = a \otimes b \text{ et } c_0 \oplus c_1 \oplus c_2 \oplus \dots \oplus c_{d-1} = c.$$

On remarque que cette dernière égalité peut être vérifiée comme suit en utilisant les propriétés de commutativité de la multiplication $\otimes$, et de distributivité de la multiplication $\otimes$ par rapport à l'addition $\oplus$:

$$\bigoplus_{i=0}^{d-1} c_i = \bigoplus_{i=0}^{d-1} [a_i \otimes b_i \oplus (\bigoplus_{j \neq i} r_{i,j})] \text{ grâce aux étapes E28 et E34, donc}$$

$$\overset{d-1}{\underset{i=0}{\oplus}}\, c_i = \overset{d-1}{\underset{i=0}{\oplus}}[a_i \otimes b_i \oplus (\underset{j>i}{\oplus} r_{i,j}) \oplus (\underset{j<i}{\oplus}(r_{j,i} \oplus a_i \otimes b_j \oplus a_j \otimes b_i))] \qquad \text{d'après} \qquad \text{E16,} \qquad \text{d'où}$$

$$\overset{d-1}{\underset{i=0}{\oplus}}\, c_i = \overset{d-1}{\underset{i=0}{\oplus}}[a_i \otimes b_i \oplus (\underset{j<i}{\oplus}(a_i \otimes b_j \oplus a_j \otimes b_i))] \qquad \text{puisque} \qquad \text{les} \qquad r_{i,j} \qquad \text{s'annulent,} \qquad \text{soit}$$

$$\overset{d-1}{\underset{i=0}{\oplus}}\, c_i = (\overset{d-1}{\underset{i=0}{\oplus}} a_i) \otimes (\overset{d-1}{\underset{i=0}{\oplus}} b_i) = a \otimes b = c.$$

On a ainsi permis d'obtenir des valeurs représentant le produit c des valeurs a et b, tout en conservant le masquage d'ordre (d-1).

Le mode de réalisation qui vient d'être décrit n'est qu'un exemple possible de mise en oeuvre de l'invention, qui ne s'y limite pas. En particulier, l'invention ne se limite pas au cas des corps de type $F_2^n$ mais s'applique également dans le cas d'autres corps (dès lors que, comme indiqué ci-dessus, la solution repose sur les règles de commutativité et de distributivité dans le corps).

**Revendications**

1. Procédé de traitement cryptographique de données incluant un procédé mis, en oeuvre par un circuit électronique, de détermination d'une représentation du produit (c) d'un premier élément (a) et d'un second élément (b) d'un ensemble fini de cardinal strictement supérieur à deux et dans lequel sont définies une addition et une multiplication commutative et distributive par rapport à l'addition, le premier élément étant représenté par une pluralité de d premières valeurs dont la somme est égale au premier élément et associées chacune à un entier compris entre 1 et d, le second élément étant représenté par une pluralité de d secondes valeurs dont la somme est égale au second élément et associées chacune à un entier compris entre 1 et d, **caractérisé en ce qu'**il comprend les étapes suivantes :

   - pour chaque couple formé d'un premier entier (i) compris entre 1 et d et d'un second entier (j) strictement supérieur au premier entier, obtention d'une valeur au moyen des sous-étapes suivantes :

      ◦ tirage d'une valeur aléatoire associée au couple (E14);
      ◦ première addition de ladite valeur aléatoire et du produit de la première valeur associée au premier entier et de la seconde valeur associée au second entier (E16) ;
      ◦ seconde addition du résultat de la première addition et du produit de la première valeur associée au second entier et de la seconde valeur associée au premier entier (E16);

   - pour chaque entier compris entre 1 et d, détermination de la valeur associée à l'entier concerné dans ladite représentation en sommant le produit des première et seconde valeurs associées à l'entier concerné, les valeurs aléatoires associées aux couples dont le premier entier est l'entier concerné et les valeurs obtenues pour les couples dont le second entier est l'entier concerné (E28, E34).

2. Procédé de détermination selon la revendication 1, dans lequel l'addition est une opération de type ou exclusif.

3. Procédé de détermination selon la revendication 1 ou 2, dans lequel la multiplication est une multiplication de polynômes à coefficients binaires suivie d'une étape de réduction par un polynôme à coefficients binaires irréductible.

4. Procédé de détermination selon la revendication 1 ou 2, dans lequel chaque élément de l'ensemble fini est une puissance donnée d'un élément primitif et dans lequel la multiplication est réalisée par une addition des exposants respectivement associés aux puissances à multiplier, modulo le cardinal du corps moins un.

5. Procédé de détermination selon l'une des revendications 1 à 4, dans lequel le produit de deux éléments de l'ensemble est obtenu par lecture, au sein d'une table mémorisée, d'un élément associé auxdits deux éléments.

6. Procédé de détermination selon l'une des revendications 1 à 5, dans lequel (d-1) valeurs parmi les d premières valeurs sont obtenues par tirage aléatoire.

7. Procédé de détermination selon l'une des revendications 1 à 6, mis en oeuvre au sein d'un microprocesseur.

8. Procédé de détermination selon l'une des revendications 1 à 7, dans lequel le premier élément et le second élément sont des données codées chacune sur une pluralité de bits.

9. Procédé de détermination selon l'une des revendications 1 à 8, dans lequel l'ensemble est un corps de Galois $F_2{}^n$, avec n supérieur ou égal à 2.

10. Procédé de détermination selon la revendication 9, dans lequel n est égal à 8.

11. Procédé d'évaluation d'une fonction appliquée à un élément d'un ensemble fini, **caractérisé en ce qu'**il comprend la détermination d'une pluralité de valeurs représentant le résultat de l'application d'un polynôme audit élément, ladite détermination incluant au moins une étape de détermination de la représentation du produit dudit élément par lui-même conforme à l'une quelconque des revendications 1 à 10.

12. Procédé d'évaluation selon la revendication 11, dans lequel la fonction est non-linéaire par rapport à l'addition.

13. Dispositif de traitement cryptographique apte à déterminer une représentation du produit d'un premier élément et d'un second élément d'un ensemble fini de cardinal strictement supérieur à deux et dans lequel sont définies une addition et une multiplication commutative et distributive par rapport à l'addition, le premier élément étant représenté par une pluralité de d premières valeurs dont la somme est égale au premier élément et associées chacune à un entier compris entre 1 et d, le second élément étant représenté par une pluralité de d secondes valeurs dont la somme est égale au second élément et associées chacune à un entier compris entre 1 et d, **caractérisé en ce qu'**il comprend:

- des moyens d'obtention, pour chaque couple formé d'un premier entier compris entre 1 et d et d'un second entier strictement supérieur au premier entier, d'une valeur :

  ∘ par tirage d'une valeur aléatoire associée au couple ;
  ∘ par première addition de ladite valeur aléatoire et du produit de la première valeur associée au premier entier et de la seconde valeur associée au second entier ;
  ∘ par seconde addition du résultat de la première addition et du produit de la première valeur associée au second entier et de la seconde valeur associée au premier entier ;

- des moyens de détermination, pour chaque entier compris entre 1 et d, de la valeur associée à l'entier concerné dans ladite représentation en sommant le produit des première et seconde valeurs associées à l'entier concerné, les valeurs aléatoires associées aux couples dont le premier entier est l'entier concerné et les valeurs obtenues pour les couples dont le second entier est l'entier concerné.

14. Dispositif d'évaluation d'une fonction appliquée à un élément d'un ensemble fini par détermination d'une pluralité de valeurs représentant le résultat de l'application d'un polynôme audit élément, comprenant un dispositif apte à déterminer la représentation du produit dudit élément par lui-même selon la revendication 13.


**Patentansprüche**

1. Verfahren zum kryptographischen Verarbeiten von Daten, das ein von einer elektronischen Schaltung ausgeführtes Verfahren zum Bestimmen einer Darstellung des Produkts (c) eines ersten Elements (a) und eines zweiten Elements (b) einer endlichen Gesamtheit mit einer Kardinalzahl, die streng größer als zwei ist, in der eine Addition und eine kommutative und distributive Multiplikation in Bezug auf die Addition definiert sind, umfasst, wobei das erste Element durch eine Mehrzahl von d ersten Werten, deren Summe gleich dem ersten Element ist und die jeweils einer ganzen Zahl im Bereich von 1 bis d zugeordnet sind, repräsentiert wird und wobei das zweite Element durch eine Mehrzahl von d zweiten Werten, deren Summe gleich dem zweiten Element ist und die jeweils einer ganzen Zahl im Bereich von 1 bis d zugeordnet sind, repräsentiert wird, **dadurch gekennzeichnet, dass** es die folgenden Schritte umfasst:

- für jedes Paar, das aus einer ersten ganzen Zahl (i) im Bereich von 1 bis d und einer zweiten ganzen Zahl (j), die streng größer als die erste ganze Zahl ist, gebildet ist, Erhalten eines Wertes anhand der folgenden Unterschritte:

  ∘ Ziehen eines Zufallswerts, der dem Paar zugeordnet wird (E14);

◦ erstes Addieren des Zufallswertes und des Produkts des der ersten ganzen Zahl zugeordneten Wertes und des der zweiten ganzen Zahl zugeordneten Wertes (E16);
◦ zweites Addieren des Ergebnisses der ersten Addition und des Produkts des der zweiten ganzen Zahl zugeordneten ersten Wertes und des der ersten ganzen Zahl zugeordneten zweiten Wertes (E16);

- für jede ganze Zahl im Bereich von 1 bis d Bestimmen des Wertes, der der betreffenden ganzen Zahl in der Darstellung zugeordnet ist, durch Summieren des Produkts des ersten und des zweiten Werts, die der betreffenden ganzen Zahl zugeordnet sind, der Zufallswerte, die den Paaren zugeordnet sind, wovon die erste ganze Zahl die betreffende ganze Zahl ist, und der Werte, die für die Paare erhalten werden, deren zweite ganze Zahl die betreffende ganze Zahl ist (E28, E34).

2. Bestimmungsverfahren nach Anspruch 1, wobei die Addition eine Operation des Typs Exklusiv-ODER ist.

3. Bestimmungsverfahren nach Anspruch 1 oder 2, wobei die Multiplikation eine Multiplikation von Polynomen mit binären Koeffizienten ist, gefolgt von einem Schritt des Reduzierens durch ein irreduzibles Polynom mit binären Koeffizienten.

4. Bestimmungsverfahren nach Anspruch 1 oder 2, wobei jedes Element der endlichen Gesamtheit eine gegebene Potenz eines primitiven Elements ist und wobei die Multiplikation durch eine Addition der Exponenten verwirklicht wird, die den jeweiligen zu multiplizierenden Potenzen zugeordnet sind, modulo der Kardinalzahl des Körpers minus eins.

5. Bestimmungsverfahren nach einem der Ansprüche 1 bis 4, wobei das Produkt aus zwei Elementen der Gesamtheit durch Lesen in einer gespeicherten Tabelle eines den beiden Elementen zugeordneten Elements erhalten wird.

6. Bestimmungsverfahren nach einem der Ansprüche 1 bis 5, wobei (d - 1) Werte unter den d ersten Werten durch Zufallsziehung erhalten werden.

7. Bestimmungsverfahren nach einem der Ansprüche 1 bis 6, das in einem Mikroprozessor ausgeführt wird.

8. Bestimmungsverfahren nach einem der Ansprüche 1 bis 7, wobei das erste Element und das zweite Element Daten sind, die jeweils mit mehreren Bits codiert sind.

9. Bestimmungsverfahren nach einem der Ansprüche 1 bis 8, wobei die Gesamtheit ein Galois-Körper $F_{2n}$ ist, wobei n größer oder gleich 2 ist.

10. Bestimmungsverfahren nach Anspruch 9, wobei n gleich 8 ist.

11. Verfahren zum Bewerten einer Funktion, die auf ein Element einer endlichen Gesamtheit angewendet wird, **dadurch gekennzeichnet, dass** es das Bestimmen mehrerer Werte umfasst, die das Ergebnis einer Anwendung eines Polynoms auf das Element repräsentieren, wobei die Bestimmung wenigstens einen Schritt des Bestimmens der Darstellung des Produkts des Elements durch sich selbst nach einem der Ansprüche 1 bis 10 umfasst.

12. Bewertungsverfahren nach Anspruch 11, wobei die Funktion in Bezug auf die Addition nichtlinear ist.

13. Vorrichtung zum kryptographischen Verarbeiten, die eine Darstellung des Produkts aus einem ersten Element und einem zweiten Element einer endlichen Gesamtheit mit einer Kardinalzahl, die streng größer als 2 ist, in der eine Addition und eine kommutative und distributive Multiplikation in Bezug auf die Addition definiert sind, bestimmen kann, wobei das erste Element durch eine Mehrzahl von d ersten Werten, deren Summe gleich dem ersten Element ist und die jeweils einer ganzen Zahl im Bereich von 1 bis d zugeordnet sind, repräsentiert wird und wobei das zweite Element durch eine Mehrzahl von d zweiten Werten, deren Summe gleich dem zweiten Element ist und die jeweils einer ganzen Zahl im Bereich von 1 bis d zugeordnet sind, repräsentiert wird, **dadurch gekennzeichnet, dass** sie Folgendes umfasst:

- Mittel, um für jedes Paar, das aus einer ersten ganzen Zahl im Bereich von 1 bis d und einer zweiten Zahl, die streng größer als die erste ganze Zahl ist, gebildet ist, einen Wert zu erhalten:

◦ durch Ziehen eines Zufallswerts, der dem Paar zugeordnet ist;

∘ durch erstes Addieren des Zufallswerts und des Produkts des der ersten ganzen Zahl zugeordneten ersten Werts und des der zweiten ganzen Zahl zugeordneten zweiten Werts;
∘ durch zweites Addieren des Ergebnisses der ersten Addition und des Produkts des der zweiten ganzen Zahl zugeordneten ersten Werts und des der ersten ganzen Zahl zugeordneten zweiten Werts;

- Mittel, um für jede ganze Zahl im Bereich von 1 bis d den Wert zu bestimmen, der der betreffenden ganzen Zahl in der Darstellung zugeordnet ist, durch Summieren des Produkts des ersten und des zweiten Werts, die der betreffenden ganzen Zahl zugeordnet sind, der Zufallswerte, die den Paaren zugeordnet sind, worin die erste ganze Zahl die betreffende ganze Zahl ist, und der Werte, die für die Paare erhalten werden, deren zweite ganze Zahl die betreffende ganze Zahl ist.

14. Vorrichtung zum Bewerten einer Funktion, die auf ein Element der endlichen Gesamtheit angewendet wird, durch Bestimmen mehrerer Werte, die das Ergebnis der Anwendung eines Polynoms auf das Element darstellen, die eine Vorrichtung umfasst, die die Darstellung des Produkts des Elements durch sich selbst nach Anspruch 13 bestimmen kann.

**Claims**

1. A cryptographic data processing method including a method, implemented by an electronic circuit, for determining a representation of the product (c) of a first element (a) and of a second element (b) of a finite set with cardinality strictly greater than two and in which are defined an addition and a multiplication that is commutative and distributive with respect to that addition, the first element being represented by a plurality of d first values of which the sum is equal to the first element and which are each associated with an integer comprised between 1 and d, the second element being represented by a plurality of d second values of which the sum is equal to the second element and which are each associated with an integer comprised between 1 and d, **characterised in that** it comprises the following steps:

- for each pair formed by a first integer (i) comprised between 1 and d and a second integer (j) strictly greater than the first integer, obtaining a value by means of the following sub-steps:

picking a random value associated with the pair (E14);
performing a first addition of said random value and of the product of the first value associated with the first integer and of the second value associated with the second integer (E16);
performing a second addition of the result of the first addition and of the product of the first value associated with the second integer and of the second value associated with the first integer (E16);

- for each integer comprised between 1 and d, determining the value associated with the integer concerned in said representation by summing the product of the first and second values associated with the integer concerned, the random values associated with the pairs of which the first integer is the integer concerned and the values obtained for the pairs of which the second integer is the integer concerned (E28, E34).

2. A determining method according to claim 1, wherein the addition is an operation of exclusive or type.

3. A determining method according to claim 1 or 2, wherein the multiplication is a multiplication of polynomials having binary coefficients followed by a step of reducing by an irreducible polynomial having binary coefficients.

4. A determining method according to claim 1 or 2, wherein each element of the finite set is a given power of a primitive element and wherein the multiplication is carried out by adding the exponents respectively associated with the powers to be multiplied, modulo the cardinality of the field less one.

5. A determining method according to one of claims 1 to 4, wherein the product of two elements of the set is obtained by reading, from a table stored in memory, an element associated with said two elements.

6. A determining method according to one of claims 1 to 5, wherein (d-1) values from among the d first values are obtained by random picking.

7. A determining method according to one of claims 1 to 6, implemented in a microprocessor.

8. A determining method according to one of claims 1 to 7, wherein the first element and the second element are items of data each coded over a plurality of bits.

9. A determining method according to one of claims 1 to 8, wherein the set is a Galois field $F_{2^n}$, with n greater than or equal to 2.

10. A determining method according to claim 9, wherein n is equal to 8.

11. A method of evaluating a function applied to an element of a finite set, **characterised in that** it comprises determining a plurality of values representing the result of the application of a polynomial to said element, said determining including at least one step of determining the representation of the product of said element times itself in accordance with any one of claims 1 to 10.

12. An evaluating method according to claim 11, wherein the function is non-linear with respect to the addition.

13. A cryptographic processing device capable of determining a representation of the product of a first element and of a second element of a finite set with cardinality strictly greater than two and in which are defined an addition and a multiplication that is commutative and distributive with respect to that addition, the first element being represented by a plurality of d first values of which the sum is equal to the first element and which are each associated with an integer comprised between 1 and d, the second element being represented by a plurality of d second values of which the sum is equal to the second element and which are each associated with an integer comprised between 1 and d, **characterised in that** it comprises:

- means for obtaining a value, for each pair formed by a first integer comprised between 1 and d and a second integer strictly greater than the first integer:

by picking a random value associated with the pair;

by performing a first addition of said random value and of the product of the first value associated with the first integer and of the second value associated with the second integer;
by performing a second addition of the result of the first addition and of the product of the first value associated with the second integer and of the second value associated with the first integer;

- means for determining, for each integer comprised between 1 and d, the value associated with the integer concerned in said representation by summing the product of the first and second values associated with the integer concerned, the random values associated with the pairs of which the first integer is the integer concerned and the values obtained for the pairs of which the second integer is the integer concerned.

14. A device for evaluating a function applied to an element of a finite set by determining a plurality of values representing the result of the application of a polynomial to said element, comprising a device for determining the representation of the product of said element times itself according to claim 13.

Fig. 1

CPU

LUT    EEPROM

PROG

$x_i$    RAM

$a_i$    $r_{i,j}$

$b_i$    $c_i$

Fig. 2

$i \leftarrow 0$ — E10

$j \leftarrow i+1$ — E12

Détermination $r_{i,j}$ par tirage aléatoire — E14

$r_{j,i} \leftarrow (r_{i,j} \oplus a_i \otimes b_j) \oplus a_j \otimes b_i$
E16

$j \leftarrow j+1$ — E18

E20 — $j = d$ ? — N

O

$i \leftarrow i+1$ — E22

N — $i = d-1$ ? — E24

O

$i \leftarrow 0$ — E26

$c_i \leftarrow a_i \otimes b_i$ — E28

$j \leftarrow 0$ — E30

E32 — $j = i$ ? — O

N

$c_i \leftarrow c_i \oplus r_{i,j}$ — E34

$j \leftarrow j+1$

E38 — $j = d$ ? — N

O

$i \leftarrow i+1$ — E40

N — $i = d$ ? — E42

O

FIN — E44

12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Private circuits: securing hardware against probing attacks. **Y. ISHAI et al.** Crypto. LNCS, 2003, vol. 2729, 463-481

- Finite fields. **RUDOLPH LIDL ; HARALD NIEDER-REITER.** Encyclopedia of mathematics and its applications. Cambridge University Press, 1997, vol. 20